# EUROPÄISCHE PATENTSCHRIFT

(11) **EP 3 324 083 B1**
(45) Veröffentlichungstag und Bekanntmachung des Hinweises auf die Patenterteilung: **01.01.2020**
(21) Anmeldenummer: 17201009.2
(22) Anmeldetag: 10.11.2017
(51) Int. Cl.: F16J 15/16

(54) **DICHTUNGSANORDNUNG UND DEREN VERWENDUNG**
SEAL ASSEMBLY AND ITS USE
AGENCEMENT D'ÉTANCHÉITÉ ET SON UTILISATION

(30) Priorität: 16.11.2016 DE 102016013638
(43) Veröffentlichungstag der Anmeldung: 23.05.2018
(73) Patentinhaber: Carl Freudenberg KG, 69469 Weinheim (DE)
(72) Erfinder: Emig, Jürgen, 64689 Grasellenbach (DE); Watling, Simon, Blyth, Northumberland, NE24 2PR (GB); Billany, Matt, Washington, Tyne and Wear, NE38 8LS (GB); Waddell, Paul, North Shields, Tyne and Wear, NE30 1LA (GB); Dixon, Ross, Newcastle Upon Tyne, Tyne and Wear, NE12 8NS (GB)

(56) Entgegenhaltungen:
- DE-A1- 3 703 360
- FR-A- 1 438 393
- US-A- 3 895 815

## Beschreibung

### Technisches Gebiet

Die Erfindung betrifft eine Dichtungsanordnung zur Abdichtung von zwei in axialer Richtung benachbart zueinander angeordneten und gegeneinander abzudichtenden Räumen, umfassend ein erstes Maschinenelement, ein zweites Maschinenelement und einen Dichtring, wobei das erste Maschinenelement vom zweiten Maschinenelement mit radialen Abstand umschlossen ist und wobei in dem durch den radialen Abstand gebildeten Spalt der Dichtring angeordnet ist, wobei der Dichtring zumindest eine dynamisch beanspruchte erste Dichtlippe aufweist, die eine abzudichtende Oberfläche des ersten Maschinenelements dichtend umschließt, wobei der Dichtring in einem Einbauraum des zweiten Maschinenelements angeordnet ist und wobei der Dichtring eine erste und eine zweite Stirnseite aufweist, von denen die erste Stirnseite dem abzudichtenden ersten Raum und die zweite Stirnseite dem abzudichtenden zweiten Raum axial zugewandt ist, wobei der erste Raum, bezogen auf den zweiten Raum, mit einem relativen Überdruck beaufschlagbar ist, wobei die zweite Stirnseite als erste Kontaktfläche des Dichtrings ausgebildet ist, wobei das zweite Maschinenelement auf der der ersten Kontaktfläche axial zugewandten Seite eine zweite Kontaktfläche aufweist und wobei sich die erste und die zweite Kontaktfläche anliegend berühren.

Außerdem betrifft die Erfindung eine Verwendung einer solchen Dichtungsanordnung.

### Stand der Technik

Eine solche Dichtungsanordnung ist aus der DE 197 28 605 A1 bekannt.

Die vorbekannte Dichtungsanordnung umfasst eine Stangen- oder Kolbendichtung, die im Wesentlichen C-förmig und axial in Richtung des ersten abzudichtenden Raums offen ausgebildet ist. Abhängig vom relativen Überdruck im ersten Raum - bezogen auf den zweiten Raum - werden die Dichtlippen des Dichtrings in radialer Richtung mehr oder weniger stark aufgespreizt und legen sich mit entsprechender Vorspannung an die abzudichtenden Flächen der gegeneinander abzudichtenden Maschinenelemente an.

Beide Dichtlippen sind dynamisch beansprucht. Eine Dichtlippe stützt sich an der Begrenzungswandung des Einbauraums des zweiten Maschinenelements dichtend ab, die andere dynamisch beanspruchte Dichtlippe demgegenüber auf der abzudichtenden Oberfläche des ersten Maschinenelements, das bezogen auf das zweite Maschinenelement in axialer Richtung translatorisch hin und her bewegbar ist.

Die einander zugewandten Kontaktflächen von Dichtring und Einbauraum erstrecken sich jeweils in radialer Richtung. Die radiale Anpressung der Dichtlippen an die jeweils abzudichtenden Oberflächen ist ausschließlich von der überdruckbedingten Aufspreizung der Dichtlippen abhängig. Im Bereich der Kontaktfläche des Dichtrings ist ein radial in Richtung des ersten Maschinenelements vorgewölbter Stützwulst angeordnet, der mit der axial gegenüberliegend angeordneten Dichtlippe durch einen bogenförmigen Abschnitt verbunden ist. Der bogenförmige Abschnitt umfasst zumindest zwei sich in Umfangsrichtung erstreckende, axial zueinander benachbarte Nuten, wobei zwischen den Nuten Stege angeordnet sind, die zusammen mit den Nuten Schmiermitteltaschen begrenzen.

Aus der DE 37 03 360 A1 ist eine Dichtungsanordnung bekannt, zum Abdichten von zwei axial zueinander verschieblichen Teilen. Die Dichtungsanordnung umfasst einen in eine Ringnut des einen Teils einsetzbaren, elastischen Dichtungsring mit einem kegelmantelartigen und mit Dichtkante versehenen Kopfteil. Das Fußteil des Dichtungsrings ist in zwei sich elastisch voneinander aufspreizende, schmale Ringteile gespalten, die auf ihren einander abgewandten Seiten in je einer weiteren, mit einer entsprechenden Seitenwandung der Ringnut zusammenwirkenden Dichtkante enden. Der Dichtungsring kann ringnutartige, mit Schmiermittel befüllbare Ausnehmungen aufweisen. Bei einer Beaufschlagung des Dichtrings mit Druckmittel gelangt das Druckmittel in eine Ringnut des Dichtungsrings und bewegt diesen in radialer Richtung aus seinem Einbauraum in Richtung des anderen Teils.

Aus der FR 1 438 393 A ist eine weitere Dichtungsanordnung bekannt, bei der ein im Wesentlichen dreieck-förmig ausgebildeter Dichtring in einem im Wesentlichen dreieck-förmig ausgebildeten Einbauraum angeordnet ist. Die den Einbauraum begrenzenden Seitenwandungen schließen einen größeren Winkel ein, als die den Dichtring begrenzenden Wandungen. Der Dichtring ist mit einer Ecke unter radialer Vorspannung im V-förmigen Nutgrund des Einbauraums abgestürzt. Die Ecke bildet einen Drehpunkt für den Dichtring, um den der Dichtring, abhängig von der Richtung der Druckbeaufschlagung, im Wesentlichen in axialer Richtung schwenkbar ist.

Eine ähnliche Dichtungsanordnung wie zuvor beschrieben, ist aus der US 3 895 815 A bekannt. Die Dichtungsvorrichtung umfasst einen Dichtungsring, der in einem ringförmigen Einbauraum angeordnet ist. Der Einbauraum hat einen, im Schnitt betrachtet, V-förmigen Querschnitt. Der Dichtungsring hat einen im Wesentlichen dreieckförmigen Querschnitt, mit gegen den Nutgrund des Einbauraums konvergierenden Flanken. Der Dichtungsring ist um den Nutgrund des Einbauraums kippbar.

Die konvergierenden Flanken bilden am Nutgrund des Einbauraums einen Drehpunkt, um den der Dichtungsring kippbar ist. Der Dichtungsring ist in seiner Ruhestellung mit einem vorbestimmten Spiel gegenüber der inneren Oberfläche des abzudichtenden Körpers eingebaut, so dass der Abstand zwischen dem Drehpunkt der Kippbewegung und den Punkten der Berührungslinie zwischen dem Dichtungsring und der Oberfläche unter dem Druck, der die Kippbewegung verursacht, größer ist als der größte Durchmesser des Dichtungsrings im Ruhezustand.

Aus der DE 41 04 070 A1 ist eine Bremszylinderdichtung mit Ausnehmung bekannt, die eine Rollback-Funktion hat. Die Bremszylinderdichtung ist zur Abdichtung eines Bremskolbens in einer Scheibenbremse vorgesehen, wobei ein Dichtring zwischen dem Bremsengehäuse und dem Außendurchmesser des Bremskolbens angeordnet ist. Die Rollback-Funktion holt den Bremskolben zwischen der Bremsscheibe und den Bremsklötzen nach Betätigung der Bremse zurück, um ein vorgegebenes Lüftspiel zwischen der Bremsscheibe und den Bremsklötzen einzustellen. Der Dichtring hat eine rechteckförmige Querschnittsfläche und sitzt in einer Dichtnut des Gehäusesattels. Der Dichtring hat sogenannte Entspannungsausnehmungen, die einen einstellbaren Raum schaffen, in den der Dichtring hinein verformt werden kann. Das Rückholen des Bremskolbens erfolgt ohne zusätzliche Mittel allein durch die Verformungscharakteristik des Dichtrings selbst. Das zuvor genannte Lüftspiel schwankt um ± 0,006 mm um einen nominalen Wert, der 0,18 mm beträgt. Wirkt ein niedriger hydraulischer Druck auf den Dichtring, werden die unteren Enden des Dichtrings in Richtung des Drucks elastisch verformt. Bei hohem hydraulischen Druck dient die elastische Verformung der unteren Enden des Dichtrings nach dem Abschalten des Bremsdrucks dazu, den Kolben entgegen der Richtung der elastischen Verformung um einen bestimmten Betrag zurück zu holen, der dem Lüftspiel der Bremsklötze auf der Bremsscheibe entspricht. Die niederdruckseitige Stirnseite des Dichtrings erstreckt sich herstellungsbedingt in radialer Richtung, entsprechend der Begrenzungswandung der Einbaunut.

Eine weitere Dichtungsanordnung ist aus der US 3,218,087 bekannt. Die Dichtungsanordnung umfasst einen statisch beanspruchten Dichtring, der als Standard-O-Ring ausgebildet ist und als Anpresselement für einen dynamisch beanspruchten Dichtring dient, der aus einem polymeren Werkstoff besteht. Der statisch beanspruchte Dichtring und der dynamisch beanspruchte Dichtring sind durch ein in axialer Richtung wirksames Vorspannelement in ihrem Einbauraum verpresst, wobei das Vorspannelement einen Bestandteil eines Gehäuses bildet. Die Kräfte, die auf die Dichtringe wirken, sind im Wesentlichen stets konstant, wobei der statisch beanspruchte Dichtring radial innenseitig vom dynamisch beanspruchten Dichtring in Form eines Back-Rings untergriffen ist, um eine Spaltextrusion und damit eine Beschädigung des statisch beanspruchten Dichtrings während der bestimmungsgemäßen Verwendung der Dichtungsanordnung zu vermeiden.

Aus der DE 38 28 692 A1 ist eine weitere Dichtungsanordnung bekannt, zum Abdichten einer hin- und herbewegten Stange. Die Dichtungsanordnung umfasst einen Dichtring mit einer dynamisch beanspruchten Dichtkante, wobei die Aufgabe der vorbekannten Dichtungsanordnung darin besteht, dass die Anpresskraft der Dichtkante an die Oberfläche des abzudichtenden Maschinenelements möglichst unabhängig vom Druck des abzudichtenden Mediums sein soll. Die Dichtungsanordnung umfasst einen als O-Ring ausgebildeten Anpressring, der einen aus einem polymeren Werkstoff bestehenden Dichtring mit seiner Dichtkante an die abzudichtende Oberfläche des abzudichtenden Maschinenelements anpresst. Auf der dem abzudichtenden Raum axial zugewandten Seite weist der Dichtring eine radial innere Kegelfläche und eine radial äußere Kegelfläche auf, wobei die radial innere Kegelfläche radial innenseitig die Dichtkante begrenzt und die radial äußere Kegelfläche radial außenseitig eine gedachte Radialebene berührt, die sich in radialer Richtung durch die Dichtkante hindurch erstreckt. Die beiden genannten Kegelflächen haben also etwa die gleiche axiale Länge. Dadurch heben sich die auf beide Kegelflächen ausgeübten Kräfte gegenseitig auf.

Aus der DE 101 02 161 A1 ist eine weitere Dichtungsanordnung bekannt, die einen Dichtring umfasst. Der Dichtring ist zwischen einer radial nach innen weisenden äußeren Begrenzungsfläche eines ringförmigen Dichtungsspalts und einer radial nach außen weisenden inneren Begrenzungsfläche des Dichtungsspalts angeordnet. Der zur Anwendung gelangende Dichtring umfasst eine Dichtungsfläche, die gegen eine der Begrenzungsflächen des Dichtungsspalts dicht anliegt, und eine Druckfläche, die auf der der Dichtungsfläche radial gegenüberliegenden Seite des Dichtrings mit der anderen der Begrenzungsflächen des Dichtungsspalts einen im Querschnitt keilförmigen Zwischenraum bildet. Außerdem umfasst die Dichtungsanordnung einen Druckring, der vom abzudichtenden Druck zumindest zeitweise in den Zwischenraum gegen die andere der Begrenzungsflächen des Dichtungsspalts und die Druckfläche vorgespannt ist, zum Andrücken der Dichtungsfläche gegen die eine Begrenzungsfläche des Dichtungsspalts.

### Darstellung der Erfindung

Der Erfindung liegt die Aufgabe zu Grunde, eine Dichtungsanordnung der eingangs genannten Art derart weiter zu entwickeln, dass der Dichtring eine einfache Geometrie aufweist, einfach und kostengünstig herstellbar ist und dass der Dichtring auch ohne C-förmige Gestalt das erste Maschinenelement proportional zum relativen Überdruck im ersten Raum unter elastischer Vorspannung dichtend umschließt.

Diese Aufgabe wird erfindungsgemäß durch eine Dichtungsanordnung mit den Merkmalen von Anspruch 1 gelöst. Auf vorteilhafte Ausgestaltungen nehmen die auf Anspruch 1 rückbezogenen Ansprüche Bezug.

Gelöst wird die Aufgabe dadurch, dass die erste und die zweite Kontaktfläche herstellungsbedingt kongruent zueinander ausgebildet sind, dass die Kontaktflächen jeweils als schiefe Ebene derart ausgebildet sind, dass bei Verlagerung des Dichtrings axial in Richtung des zweiten Raums gleichzeitig eine Relativbewegung der beiden Kontaktflächen aufeinander erfolgt und der Innendurchmesser der zumindest einen Dichtlippe die abzudichtende Oberfläche unter zunehmender radialer Vorspannung dichtend umschließt, wobei die Kontaktflächen mit einer gedachten Radialebene, die die Kontaktflächen durchschneidet, jeweils einen Winkel einschließen, der 5° bis 45° beträgt.

Hierbei ist von Vorteil, dass der Dichtring eine sehr einfache geometrische Gestalt aufweist, insbesondere nicht C-förmig ausgebildet ist und die abzudichtende Oberfläche des ersten Maschinenelements trotzdem mit einer variablen radialen Anpresskraft, abhängig von der Höhe des relativen Überdrucks im ersten Raum, dichtend umschließt.

Die erste Dichtlippe umschließt die abzudichtende Oberfläche des ersten Maschinenelements in jedem Betriebszustand dichtend. Also auch dann, wenn zwischen den beiden abzudichtenden Räumen kein Differenzdruck besteht. In einem solchen Fall reicht die elastische Vorspannung in radialer Richtung, mit der die erste Dichtlippe die abzudichtende Oberfläche des ersten Maschinenelements aufgrund der Überdeckung zum ersten Maschinenelement dichtend umschließt, aus, um die beiden Räume zuverlässig gegeneinander abzudichten.

Steigt demgegenüber der Druck im ersten Raum, bezogen auf den Druck im zweiten Raum, wird der Dichtring axial in Richtung des zweiten Raums gedrückt. Die erste Kontaktfläche des Dichtrings, die als schiefe Ebene ausgebildet ist, wird an die zweite Kontaktfläche des Einbauraums verstärkt angedrückt, die ebenfalls als schiefe Ebene ausgebildet ist. Durch die Neigung von erster und zweiter Kontaktfläche ergibt sich bei Druckbeaufschlagung des Dichtrings aus dem abzudichtenden ersten Raum eine axiale Verlagerung des Dichtrings axial in Richtung des zweiten Raums und gleichzeitig eine Relativbewegung der beiden Kontaktflächen aufeinander, derart, dass mit steigendem Druck im ersten Raum und einer Bewegung der ersten Kontaktfläche auf der zweiten Kontaktfläche der Innendurchmesser des Dichtrings reduziert und dadurch die Dichtlippe verstärkt an die abzudichtende Oberfläche des ersten Maschinenelements angedrückt wird.

Die Stärke der radialen Vorspannung, mit der die erste Dichtlippe die abzudichtende Oberfläche des ersten Maschinenelements dichtend umschließt, korreliert also mit dem relativen Überdruck im abzudichtenden Raum.

Für die meisten Anwendungsfälle hat es sich als vorteilhaft bewährt, wenn die Kontaktflächen mit einer gedachten Radialebene, die die Kontaktflächen durchschneidet, jeweils einen Winkel einschließen, der 5° bis 45° beträgt.

Besonders vorteilhaft sind die Gebrauchseigenschaften, wenn die Winkel 10° bis 30° betragen. Durch die vergleichsweise kleinen Winkel baut die Dichtungsanordnung in axialer Richtung kompakt, und auch bei kleinen Wegen des Dichtrings axial in Richtung des niederdruckseitigen abzudichtenden zweiten Raums kann die radiale Vorspannung der Dichtlippe an der abzudichtenden Oberfläche des ersten Maschinenelements signifikant gesteigert werden.

Die erste Stirnseite kann in radialer Richtung parallel zur gedachten Radialebene angeordnet sein. Die erste Stirnseite bildet die Fläche, an der der relative Überdruck aus dem ersten abzudichtenden Raum anliegt. Die erste Stirnseite ist kreisringförmig und in radialer Richtung im Wesentlichen glattflächig, ohne sprunghafte Richtungsänderungen, ausgebildet.

Durch die zuvor beschriebenen Winkel ergibt sich in Verbindung mit der sich in radialer Richtung erstreckenden ersten Stirnseite eine Ausgestaltung, durch die der Dichtring eine in radialer Richtung zur ersten Dichtlippe hin zunehmende Dicke in axialer Richtung aufweist. Dadurch weist die Innenumfangsfläche des Dichtrings eine größere axiale Erstreckung auf, als die Außenumfangsfläche. Hierbei ist von Vorteil, dass die vergleichsweise große Erstreckung des Innenumfangs in axialer Richtung genutzt werden kann, um bedarfsweise zusätzlich zur ersten Dichtlippe weitere Dichtlippen vorzusehen, die der ersten Dichtlippe funktionstechnisch nachgeschaltet sind.

Der ersten Dichtlippe kann axial auf der den Kontaktflächen zugewandten Seite zumindest eine dynamisch beanspruchte weitere Dichtlippe in einer funktionstechnischen Reihenschaltung axial benachbart zugeordnet sein. Eine solche funktionstechnische Reihenschaltung von Dichtlippen ist von Vorteil, um die Gebrauchseigenschaften der Dichtungsanordnung, insbesondere die Dichtwirkung bei hohen abzudichtenden Drücken, zu verbessern. Trotzdem sollen Reibleistung und Verschleiß der Dichtlippe möglichst minimal sein.

Die weiteren Dichtlippen können, bezogen auf die erste Dichtlippe, bevorzugt einen größeren Durchmesser aufweisen, je weiter sie den Kontaktflächen in axialer Richtung angenähert sind. Durch eine solche Ausgestaltung ist die zuvor beschriebene Minimierung der Reibleistung und des Verschleißes der Dichtlippen möglich. Mit zunehmendem Druck im ersten Raum werden zusätzlich zur ersten Dichtlippe nacheinander die weiteren Dichtlippen mit dem ersten Maschinenelement dichtend in Berührung gebracht, abhängig von der Höhe des Drucks im ersten Raum.

Besteht zwischen den beiden gegeneinander abzudichtenden Räumen kein Differenzdruck oder nur ein sehr geringer Differenzdruck, zum Beispiel in Höhe von bis zu 5 bar, umschließt nur die erste Dichtlippe die abzudichtende Oberfläche des ersten Maschinenelements mit vergleichsweise geringer radialer Vorspannung dichtend.

Wird der Differenzdruck demgegenüber größer, legt sich, zum Beispiel bei einem Differenzdruck von etwa 15 bar, die der ersten Dichtlippe axial am nächsten benachbarte weitere Dichtlippe zusätzlich an die abzudichtende Oberfläche des ersten Maschinenelements dichtend an. Die radiale Vorspannung der ersten Dichtlippe ist dabei größer, als die radiale Vorspannung der weiteren Dichtlippe.

Wird der Differenzdruck weiter erhöht, beispielsweise auf 25 bar und mehr, umschließen alle Dichtlippen die abzudichtende Oberfläche des abzudichtenden Maschinenelements mit radialer Vorspannung dichtend, wobei auch in diesem Fall die radiale Vorspannung, mit der die erste Dichtlippe die abzudichtende Oberfläche des abzudichtenden ersten Maschinenelements dichtend umschließt am größten ist und die radiale Vorspannung der axial angrenzenden Dichtlippen mit zunehmendem axialen Abstand von der ersten Dichtlippe abnimmt.

Dadurch ist die Geometrie des Dichtrings ausgezeichnet an die jeweiligen Gegebenheiten des Anwendungsfalles, insbesondere an die Höhe der abzudichtenden Drücke angepasst, wobei Reibleistung und Verschleiß dadurch minimiert und die Standzeiten des Dichtrings maximiert sind.

Der Dichtring kann bevorzugt einstückig ausgebildet sein. Ein solcher Dichtring ist einfach und kostengünstig herstellbar. Auch die Montage des einstückigen Dichtrings ist denkbar einfach und die Gefahr von Montagefehlern ist auf ein Minimum begrenzt. Im Hinblick auf mehrteilige Dichtringe ist das von hervorzuhebendem Vorteil.

Der Dichtring ist bevorzugt materialeinheitlich ausgebildet. Zusätzlich zur einfachen und kostengünstigen Herstellbarkeit des Dichtrings ist von Vorteil, dass ein solcher Dichtring im Anschluss an seine Gebrauchsdauer sortenrein recycelt werden kann.

Der Werkstoff, aus dem der Dichtring hauptsächlich besteht, kann einen Füllstoff umfassen.

Der Füllstoff ist bevorzugt verschleißreduzierend und/oder reibungsreduzierend ausgebildet. Durch eine solche Ausgestaltung weisen die zur Anwendung gelangenden Dichtlippen auch bei möglicherweise auftretender Mangelschmierung eine ausgezeichnete Haltbarkeit auf, so dass der Dichtring gleichbleibend gute Gebrauchseigenschaften während einer langen Gebrauchsdauer aufweist. Außerdem kann die Gleitfähigkeit der schiefen Ebenen von Dichtring und zweitem Maschinenelement aufeinander dadurch positiv beeinflusst werden.

Als vorteilhaft hat es sich bewährt, wenn der Dichtring zumindest hauptsächlich aus einem FKM-Werkstoff besteht. Der Dichtring weist dadurch eine gute Haltbarkeit während einer langen Gebrauchsdauer auf, ist in einem weiten Temperaturbereich einsetzbar und gegen die meisten abzudichtenden Medien resistent.

Außerdem betrifft die Erfindung die Verwendung einer Dichtungsanordnung, wie zuvor beschrieben, in einem Einrohr-Stoßdämpfer. Solche Einrohr-Stoßdämpfer gelangen zum Beispiel in Kraftfahrzeugen zur Anwendung und haben einen, im Vergleich zu Zweirohr-Stoßdämpfern, einfachen und teilearmen Aufbau und sind deshalb kostengünstig herstellbar.

In einem Einrohr-Stoßdämpfer ist der Dichtring innerhalb seines Einbauraums statisch vorgespannt, und zwar mit einem relativen Überdruck im abzudichtenden ersten Raum, der etwa 15 bar beträgt. Während der bestimmungsgemäßen Verwendung des Einrohr-Stoßdämpfers verändert sich der Differenzdruck, je nachdem ob der Einrohr-Stoßdämpfer in axialer Richtung gestaucht oder in axialer Richtung auseinander gezogen wird. Unabhängig von den Betriebsbedingungen ist im abzudichtenden ersten Raum jedoch stets ein statischer relativer Überdruck vorhanden.

### Kurzbeschreibung der Zeichnung

Die erfindungsgemäße Dichtungsanordnung wird nachfolgend anhand der Figuren 1 bis 3 näher beschrieben.

Die Figuren 1 bis 3 zeigen jeweils in schematischer Darstellung:
Figur 1 ein Ausführungsbeispiel der erfindungsgemäßen Dichtungsanordnung im zusammengebauten Zustand, wobei der Dichtring in herstellungsbedingten Zustand dargestellt ist,
Figur 2 den Dichtring aus Figur 1 im eingebauten Zustand, ohne Differenzdruckbeaufschlagung,
Figur 3 den Dichtring aus Figur 1 und Figur 2 im eingebauten Zustand, wobei der am Dichtring anliegende Differenzdruck etwa 25 bar beträgt.

### Ausführung der Erfindung

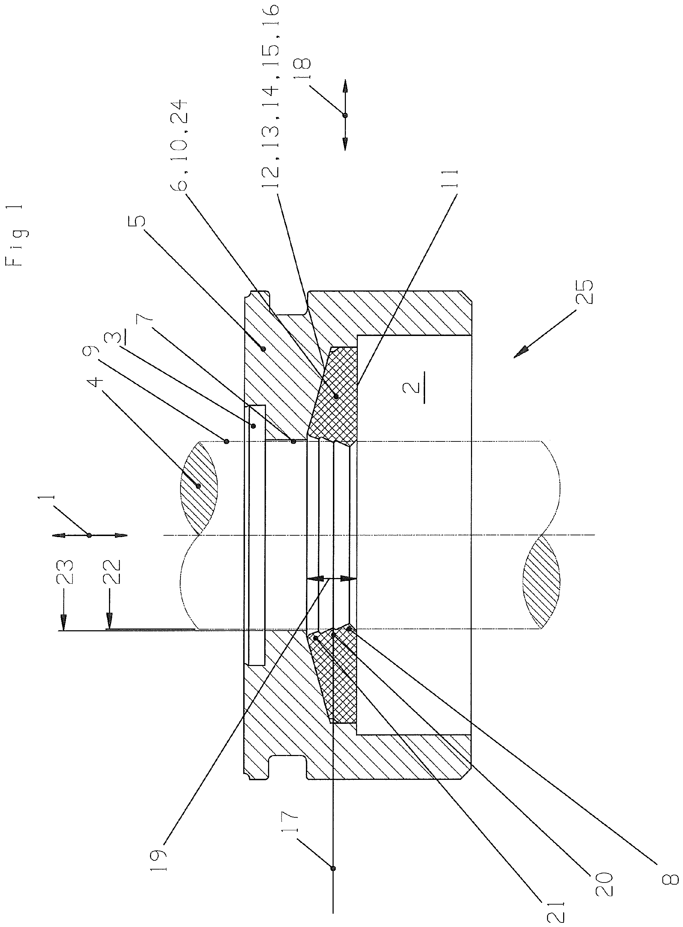

In Figur 1 ist ein Ausführungsbeispiel einer erfindungsgemäßen Dichtungsanordnung in schematischer Darstellung gezeigt.

Die Dichtungsanordnung aus Figur 1 gelangt in einem Einrohr-Stoßdämpfer eines Kraftfahrzeugs zur Anwendung und umfasst das erste Maschinenelement 4, das zweite Maschinenelement 5 und den Dichtring 6, der die beiden Räume 2, 3, die in axialer Richtung 1 benachbart zueinander angeordnet sind, gegeneinander abdichtet.

Das erste Maschinenelement 4 ist als Kolben des Einrohr-Stoßdämpfers 25 ausgebildet, das zweite Maschinenelement 5 als Gehäuse des Einrohr-Stoßdämpfers 25, das den Kolben außenumfangsseitig umschließt. Der Kolben ist relativ zum Gehäuse in axialer Richtung 1 hin und her beweglich, wobei der Kolben vom Gehäuse mit radialem Abstand umschlossen ist. Der Dichtring 6 ist in dem durch den radialen Abstand gebildeten Spalt 7 innerhalb des Einbauraums 10 angeordnet. Der Dichtring 6 umfasst die dynamisch beanspruchte erste Dichtlippe 8 sowie zwei weitere dynamisch beanspruchte Dichtlippen 20, 21, die der ersten Dichtlippe 8 auf der dem ersten abzudichtenden Raum 2 axial abgewandten Seite in einer funktionstechnischen Reihenschaltung nachgeschaltet sind.

Der Dichtring 6 ist kreisringförmig ausgebildet und umfasst eine erste 11 und eine zweite Stirnseite 12. Die erste Stirnseite 11 ist dem abzudichtenden ersten Raum 2 und die zweite Stirnseite 12 dem abzudichtenden zweiten Raum 3 axial zugewandt. Der erste Raum 2 bildet den Hochdruckraum des Einrohr-Stoßdämpfers 25 der zweite Raum 3 demgegenüber den Niederdruckraum.

Die zweite Stirnseite 12 des Dichtrings 6 ist als erste Kontaktfläche 13 ausgebildet, wobei die erste Kontaktfläche 13 eine zweite Kontaktfläche 14 anliegend berührt, die Bestandteil des zweiten Maschinenelements 5 ist und auf der der ersten Kontaktfläche 13 axial zugewandten Seite des zweiten Maschinenelements 5 angeordnet ist.

Die Kontaktflächen 13 sind jeweils als schiefe Ebene 15, 16 ausgebildet. Bei Verlagerung des Dichtrings 6 axial in Richtung des niederdruckseitig angeordneten zweiten Raums 3 werden die Innendurchmesser der Dichtlippen 8, 20, 21 durch eine Verschiebung der Kontaktflächen 13, 14 aufeinander radial in Richtung der abzudichtenden Oberfläche 9 verkleinert. Die hier gezeigten Kontaktflächen 13, 14 schließen mit der gedachten Radialebene 17, die die Kontaktflächen 13, 14 in radialer Richtung durchschneidet, jeweils einen Winkel α₁, α₂, der 12 bis 25 Grad beträgt.

Die erste Stirnseite 11 ist axial gegenüberliegend zur zweiten Stirnseite 12 des Dichtrings 6 angeordnet und erstreckt sich in radialer Richtung 18 parallel zu der gedachten Radialebene 17. Durch die Ausgestaltung der Stirnseiten 11, 12 und die zuvor genannten Winkel der Kontaktflächen 13, 14, weist der Dichtring 6 radial innenseitig eine größere Dicke 19 in axialer Richtung 1 auf, als in radialer Richtung 18 außenumfangsseitig.

Der Dichtring 6 ist einstückig und materialeinheitlich ausgebildet und besteht überwiegend aus einem FKM-Werkstoff, der optional mit einem verschleißreduzierenden und/oder reibungsreduzierenden Füllstoff 24 gefüllt sein kann.

Das Vorsehen eines solchen Füllstoffs 24 ist insbesondere für die Haltbarkeit der Dichtlippen 8, 20, 21 vorteilhaft.

Beim Transport von Kraftfahrzeugen per LKW, Frachtschiff oder Bahn kann es zu sehr kleinamplitudigen Mikroschwingungen kommen, wobei sich das erste Maschinenelement 4 analog zu den Mikroschwingungen relativ zum zweiten Maschinenelement 5 während des gesamten Transports des Kraftfahrzeugs bewegt. Während des Transports des Kraftfahrzeugs werden die Dichtlippen 8, 20, 21 nur unzureichend geschmiert, im Gegensatz zur bestimmungsgemäßen Verwendung der Dichtungsanordnung, zum Beispiel dann, wenn das Kraftfahrzeug auf der Straße gefahren wird, sich das erste Maschinenelement 4 axial zum zweiten Maschinenelement 5 mit unterschiedlich großen Amplituden bewegt und dadurch die Dichtlippen 8, 20, 21 ausreichend gut geschmiert werden.

Durch die verschleißreduzierenden und/oder reibungsreduzierenden Füllstoffe 24 tritt auch dann kein nachteiliger Verschleiß an den Dichtlippen 8, 20, 21 auf, wenn unter den Dichtlippen 8, 20, 21, zum Beispiel beim Transport wie zuvor beschrieben, Mangelschmierung herrscht.

In Figur 1 ist ein Ausführungsbeispiel der erfindungsgemäßen Dichtungsanordnung im zusammengebauten Zustand gezeigt.

Der Dichtring 6 ist in seinem herstellungsbedingten Zustand gezeigt. Das abzudichtende erste Maschinenelement 4 ist unsichtbar strich-zwei-punktiert dargestellt.

Es ist zu erkennen, dass die erste Dichtlippe 8 einen Innendurchmesser aufweist, der kleiner als der Durchmesser der abzudichtenden Oberfläche 9 des ersten Maschinenelements 4 ist. Durch diese Überdeckung umschließt die erste Dichtlippe 8 die abzudichtende Oberfläche 9 stets unter radialer Vorspannung dichtend.

Der Durchmesser 22 der axial zur Dichtlippe 8 benachbart angeordneten Dichtlippe 20 ist gleich oder nur ganz wenig kleiner, als der Durchmesser der abzudichtenden Oberfläche 9. Dadurch umschließt die zweite Dichtlippe 20 die abzudichtende Oberfläche 9 ohne Differenzdruck zwischen den Räumen 2, 3 mit einer, wenn überhaupt, nur sehr geringen radialen Vorspannung.

Die dritte Dichtlippe 21 weist demgegenüber einen größeren Durchmesser 23 auf, als die abzudichtende Oberfläche 9, so dass die dritte Dichtlippe 21 die abzudichtende Oberfläche 9 nur bei deutlichem Differenzdruck zwischen den abzudichtenden Räumen 2, 3, zum Beispiel in der Größenordnung um 25 bar, dichtend umschließt.

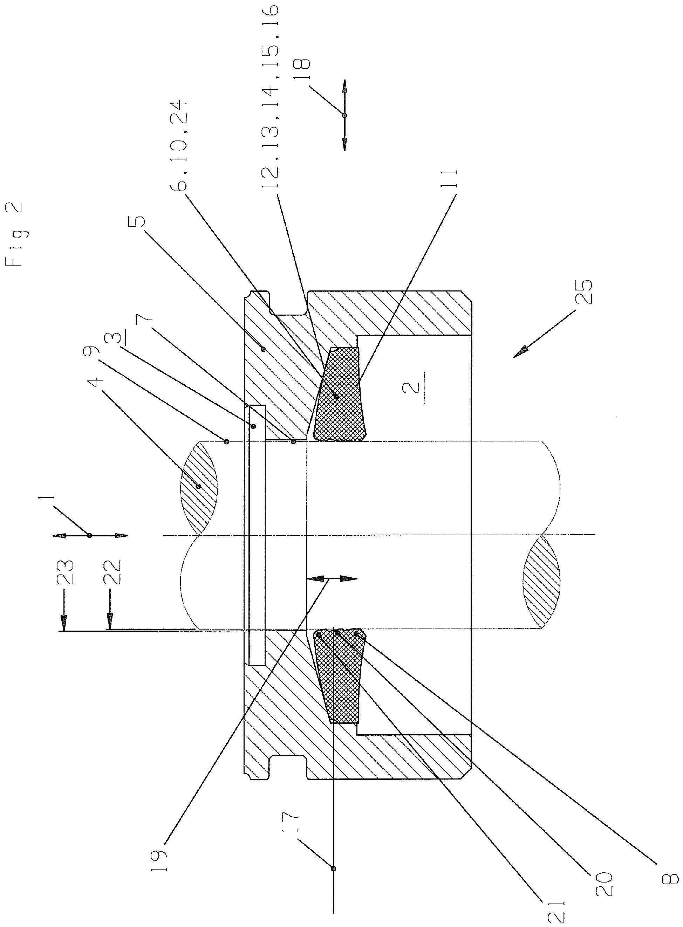

In Figur 2 ist ein Ausschnitt aus der Dichtungsanordnung gemäß Figur 1 gezeigt. Die Dichtungsanordnung ist im zusammengebauten Zustand gezeigt, wobei der Differenzdruck zwischen den abzudichtenden Räumen 2, 3 ungefähr 0 bar beträgt. Die erste Dichtlippe 8 umschließt die abzudichtende Oberfläche 9 mit ausreichend großer radialer Vorspannung dichtend, die zweite Dichtlippe 20 umschließt die abzudichtende Oberfläche 9 mit relativ geringerer radialer Vorspannung ebenfalls dichtend und die dritte Dichtlippe 21 umschließt die abzudichtende Oberfläche 9 mit radialem Abstand; sie berührt die abzudichtende Oberfläche 9 nicht.

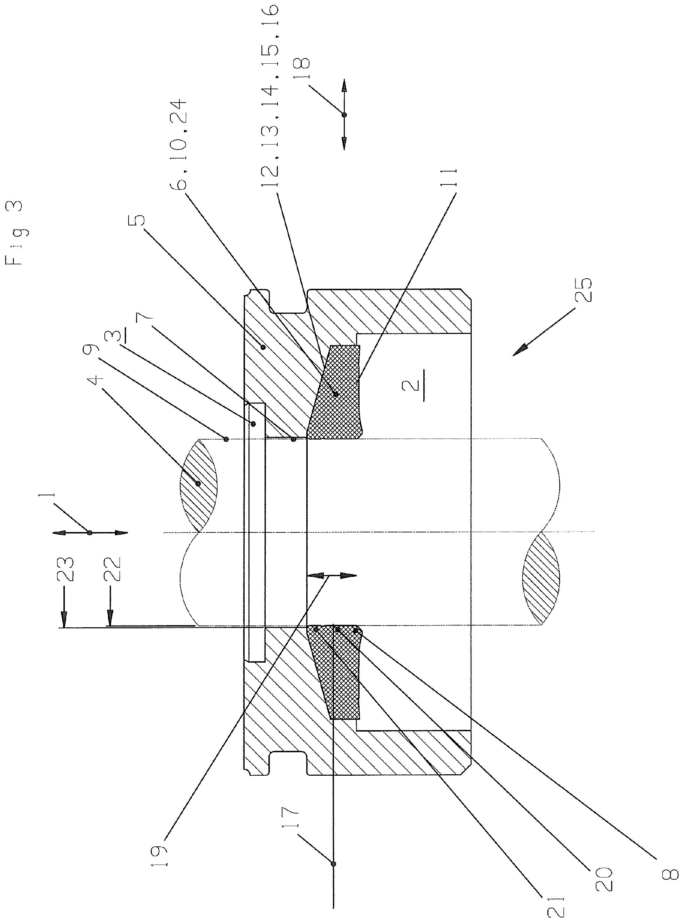

In Figur 3 ist der Ausschnitt aus den Figuren 1 und 2 gezeigt, wobei der Differenzdruck zwischen den gegeneinander abzudichtenden Räumen 2, 3 etwa 25 bar beträgt. In diesem Betriebszustand wird die abzudichtende Oberfläche 9 von allen drei Dichtlippen 8, 20, 21 unter radialer Vorspannung dichtend umschlossen, wobei die radiale Vorspannung der ersten Dichtlippe 8 am größten, der zweiten Dichtlippe 20 mittelmäßig groß und der dritten Dichtlippe 21 am kleinsten ist.

## Patentansprüche

1. Dichtungsanordnung zur Abdichtung von zwei in axialer Richtung (1) benachbart zueinander angeordneten und gegeneinander abzudichtenden Räumen (2, 3), umfassend ein erstes Maschinenelement (4), ein zweites Maschinenelement (5) und einen Dichtring (6), wobei das erste Maschinenelement (4) vom zweiten Maschinenelement (5) mit radialen Abstand umschlossen ist und wobei in dem durch den radialen Abstand gebildeten Spalt (7) der Dichtring (6) angeordnet ist, wobei der Dichtring (6) zumindest eine dynamisch beanspruchte erste Dichtlippe (8) aufweist, die eine abzudichtende Oberfläche (9) des ersten Maschinenelements (4) dichtend umschließt, wobei der Dichtring (6) in einem Einbauraum (10) des zweiten Maschinenelements (5) angeordnet ist und wobei der Dichtring (6) eine erste (11) und eine zweite Stirnseite (12) aufweist, von denen die erste Stirnseite (11) dem abzudichtenden ersten Raum (2) und die zweite Stirnseite (12) dem abzudichtenden zweiten Raum (3) axial zugewandt ist, wobei der erste Raum (2), bezogen auf den zweiten Raum (3), mit einem relativen Überdruck beaufschlagbar ist, wobei die zweite Stirnseite (12) als erste Kontaktfläche (13) des Dichtrings (6) ausgebildet ist, wobei das zweite Maschinenelement (5) auf der der ersten Kontaktfläche (13) axial zugewandten Seite eine zweite Kontaktfläche (14) aufweist und wobei sich die erste (13) und die zweite Kontaktfläche (14) anliegend berühren, **dadurch gekennzeichnet, dass** die erste (13) und die zweite Kontaktfläche (14) herstellungsbedingt kongruent zueinander ausgebildet sind, dass die Kontaktflächen (13, 14) jeweils als schiefe Ebene (15, 16) derart ausgebildet sind, dass bei Verlagerung des Dichtrings (6) axial in Richtung des zweiten Raums (3) gleichzeitig eine Relativbewegung der beiden Kontaktflächen (13, 14) aufeinander erfolgt und der Innendurchmesser der zumindest einen Dichtlippe (8) die abzudichtende Oberfläche (9) unter zunehmender radialer Vorspannung dichtend umschließt, wobei die Kontaktflächen (13, 14) mit einer gedachten Radialebene (17), die die Kontaktflächen (13, 14) durchschneidet, jeweils einen Winkel (α₁, α₂) einschließen, der 5° bis 45° beträgt.

2. Dichtungsanordnung nach Anspruch 1, **dadurch gekennzeichnet, dass** die Winkel (α₁, α₂) jeweils 10° bis 30° betragen.

3. Dichtungsanordnung nach einem der Ansprüche 1 oder 2, **dadurch gekennzeichnet, dass** die erste Stirnseite (11) in radialer Richtung (18) parallel zur gedachten Radialebene (17) angeordnet ist.

4. Dichtungsanordnung nach einem der Ansprüche 1 bis 3, **dadurch gekennzeichnet, dass** der Dichtring (6) eine in radialer Richtung (18) zur ersten Dichtlippe (8) hin zunehmende Dicke (19) in axialer Richtung (1) aufweist.

5. Dichtungsanordnung nach einem der Ansprüche 1 bis 4, **dadurch gekennzeichnet, dass** der ersten Dichtlippe (8) axial auf der den Kontaktflächen (13, 14) zugewandten Seite zumindest eine dynamisch beanspruchte weitere Dichtlippe (20, 21) in einer funktionstechnischen Reihenschaltung axial benachbart zugeordnet ist.

6. Dichtungsanordnung nach Anspruch 5, **dadurch gekennzeichnet, dass** die weiteren Dichtlippen (20, 21), bezogen auf die erste Dichtlippe (8), einen größeren Durchmesser (22, 23) aufweisen, je weiter sie den Kontaktflächen (13, 14) in axialer Richtung (1) angenähert sind.

7. Dichtungsanordnung nach einem der Ansprüche 1 bis 6, **dadurch gekennzeichnet, dass** der Dichtring (6) einstückig ausgebildet ist.

8. Dichtungsanordnung nach einem der Ansprüche 1 bis 7, **dadurch gekennzeichnet, dass** der Dichtring (6) materialeinheitlich ausgebildet ist.

9. Dichtungsanordnung nach einem der Ansprüche 1 bis 7, **dadurch gekennzeichnet, dass** der Werkstoff, aus dem der Dichtring (6) hauptsächlich besteht, einen Füllstoff (24) umfasst.

10. Dichtungsanordnung nach Anspruch 9, **dadurch gekennzeichnet, dass** der Füllstoff (24) verschleißreduzierend und/oder reibungsreduzierend ausgebildet ist.

11. Dichtungsanordnung nach einem der Ansprüche 1 bis 10, **dadurch gekennzeichnet, dass** der Dichtring (6) zumindest hauptsächlich aus einem FKM-Werkstoff besteht.

12. Verwendung einer Dichtungsanordnung nach einem der Ansprüche 1 bis 11 in einem Einrohr-Stoßdämpfer (25).

## Claims

1. Seal arrangement for sealing two spaces (2, 3) which are arranged adjacently with respect to one another in the axial direction (1) and are to be sealed with respect to one another, comprising a first machine element (4), a second machine element (5) and a sealing ring (6), the first machine element (4) being enclosed by the second machine element (5) at a radial spacing, and the sealing ring (6) being arranged in the gap (7) which is formed by way of the radial spacing, the sealing ring (6) having at least one dynamically loaded first sealing lip (8) which sealingly encloses a surface (9) to be sealed of the first machine element (4), the sealing ring (6) being arranged in an installation space (10) of the second machine element (5), and the sealing ring (6) having a first (11) and a second end side (12), of which the first end side (11) axially faces the first space (2) to be sealed and the second end side (12) axially faces the second space (3) to be sealed, it being possible for the first space (2) to be loaded with a relative positive pressure, in relation to the second space (3), the second end side (12) being configured as a first contact face (13) of the sealing ring (6), the second machine element (5) having a second contact face (14) on the side which axially faces the first contact face (13), and the first (13) and the second contact face (14) making contact with one another in a bearing manner, **characterized in that** the first (13) and the second contact face (14) are of congruent configuration with respect to one another in a production-induced manner, **in that** the contact faces (13, 14) are configured in each case as an oblique plane (15, 16) in such a way that, in the case of a movement of the sealing ring (6) axially in the direction of the second space (3), a relative movement of the two contact faces (13, 14) on one another takes place at the same time, and the internal diameter of the at least one sealing lip (8) sealingly encloses the surface (9) to be sealed with an increasing radial prestress, the contact faces (13, 14) in each case enclosing an angle (α₁, α₂) which is from 5° to 45° with an imaginary radial plane (17) which intersects the contact faces (13, 14).

2. Seal arrangement according to Claim 1, **characterized in that** the angles (α₁, α₂) are in each case from 10° to 30°.

3. Seal arrangement according to either of Claims 1 and 2, **characterized in that** the first end side (11) is arranged parallel to the imaginary radial plane (17) in the radial direction (18).

4. Seal arrangement according to one of Claims 1 to 3, **characterized in that** the sealing ring (6) has a thickness (19) in the axial direction (1), which thickness (19) increases in the radial direction (18) towards the first sealing lip (8).

5. Seal arrangement according to one of Claims 1 to 4, **characterized in that**, axially on the side which faces the contact faces (13, 14), the first sealing lip (8) is assigned at least one dynamically loaded further sealing lip (20, 21) in a manner which is adjacent axially in a series connection in functional terms.

6. Seal arrangement according to Claim 5, **characterized in that**, in relation to the first sealing lip (8), the further sealing lips (20, 21) have a greater diameter (22, 23) the closer they approach the contact faces (13, 14) in the axial direction (1).

7. Seal arrangement according to one of Claims 1 to 6, **characterized in that** the sealing ring (6) is configured in one piece.

8. Seal arrangement according to one of Claims 1 to 7, **characterized in that** the sealing ring (6) is configured from one material.

9. Seal arrangement according to one of Claims 1 to 7, **characterized in that** the material, of which the sealing ring (6) mainly consists, comprises a filler (24).

10. Seal arrangement according to Claim 9, **characterized in that** the filler (24) is of wear-reducing and/or friction-reducing configuration.

11. Seal arrangement according to one of Claims 1 to 10, **characterized in that** the sealing ring (6) consists at least mainly of an FKM material.

12. Use of a seal arrangement according to one of Claims 1 to 11 in a monotube shock absorber (25).

## Revendications

1. Agencement d'étanchéité pour l'étanchéité de deux espaces (2, 3) disposés l'un à côté de l'autre dans la direction axiale (1) et devant être étanchéifiés l'un par rapport à l'autre, comprenant un premier élément de machine (4), un deuxième élément de machine (5) et une bague d'étanchéité (6), le premier élément de machine (4) étant entouré à distance radiale par le deuxième élément de machine (5), et la bague d'étanchéité (6) étant disposée dans la fente (7) formée par la distance radiale, la bague d'étanchéité (6) présentant au moins une première lèvre d'étanchéité (8) sollicitée dynamiquement, qui entoure hermétiquement une surface à étanchéifier (9) du premier élément de machine (4), la bague d'étanchéité (6) étant disposée dans un espace d'installation (10) du deuxième élément de machine (5) et la bague d'étanchéité (6) présentant un premier (11) et un deuxième (12) côté frontal, parmi lesquels le premier côté frontal (11) est tourné axialement vers le premier espace (2) à étanchéifier et le deuxième côté frontal (12) est tourné axialement vers le deuxième espace (3) à étanchéifier, le premier espace (2) pouvant être sollicité par rapport au deuxième espace (3) avec une surpression relative, le deuxième côté frontal (12) étant réalisé sous forme de première surface de contact (13) de la bague d'étanchéité (6), le deuxième élément de machine (5) présentant une deuxième surface de contact (14) du côté tourné axialement vers la première surface de contact (13), et la première (13) et la deuxième (14) surface de contact étant en contact en appui l'une contre l'autre, **caractérisé en ce que** la première (13) et la deuxième (14) surface de contact sont réalisées de manière à coïncider l'une avec l'autre du fait de la fabrication, **en ce que** les surfaces de contact (13, 14) sont réalisées à chaque fois sous forme de plans obliques (15, 16) de telle sorte que lors d'un déplacement de la bague d'étanchéité (6) axialement dans la direction du deuxième espace (3), il se produise simultanément un mouvement relatif des deux surfaces de contact (13, 14) l'une vers l'autre et que le diamètre intérieur de l'au moins une lèvre d'étanchéité (8) entoure de manière hermétique la surface à étanchéifier (9) avec une précontrainte radiale croissante, les surfaces de contact (13, 14) formant à chaque fois un angle (α₁, α₂) compris entre 5° et 45° avec un plan radial imaginaire (17) qui passe à travers les surfaces de contact (13, 14).

2. Agencement d'étanchéité selon la revendication 1, **caractérisé en ce que** les angles (α₁, α₂) valent à chaque fois 10° à 30°.

3. Agencement d'étanchéité selon l'une quelconque des revendications 1 et 2, **caractérisé en ce que** le premier côté frontal (11) est disposé dans la direction radiale (18) parallèlement au plan radial imaginaire (17).

4. Agencement d'étanchéité selon l'une quelconque des revendications 1 à 3, **caractérisé en ce que** la bague d'étanchéité (6) présente dans la direction axiale (1) une épaisseur croissante (19) dans la direction radiale (18) vers la première lèvre d'étanchéité (8).

5. Agencement d'étanchéité selon l'une quelconque des revendications 1 à 4, **caractérisé en ce qu'**à la première lèvre d'étanchéité (8) est associée, de manière axialement adjacente dans un montage en série fonctionnel technique, axialement du côté tourné vers les surfaces de contact (13, 14), au moins une lèvre d'étanchéité supplémentaire sollicitée dynamiquement (20, 21).

6. Agencement d'étanchéité selon la revendication 5, **caractérisé en ce que** les lèvres d'étanchéité supplémentaires (20, 21), présentent, par rapport à la première lèvre d'étanchéité (8), un plus grand diamètre (22, 23) plus elles sont proches des surfaces de contact (13, 14) dans la direction axiale (1).

7. Agencement d'étanchéité selon l'une quelconque des revendications 1 à 6, **caractérisé en ce que** la bague d'étanchéité (6) est réalisée d'une seule pièce.

8. Agencement d'étanchéité selon l'une quelconque des revendications 1 à 7, **caractérisé en ce que** la bague d'étanchéité (6) est réalisée de manière monobloc.

9. Agencement d'étanchéité selon l'une quelconque des revendications 1 à 7, **caractérisé en ce que** le matériau constituant majoritairement la bague d'étanchéité (6) comprend une charge (24).

10. Agencement d'étanchéité selon la revendication 9, **caractérisé en ce que** la charge (24) est réalisée de manière à réduire l'usure et/ou à réduire les frottements.

11. Agencement d'étanchéité selon l'une quelconque des revendications 1 à 10, **caractérisé en ce que** la bague d'étanchéité (6) se compose au moins principalement d'un matériau à base de FKM.

12. Utilisation d'un agencement d'étanchéité selon l'une quelconque des revendications 1 à 11 dans un amortisseur monotube (25).
